# EUROPEAN PATENT APPLICATION

(11) **EP 0 584 371 A1**
(43) Date of publication of application: **02.03.1994**
(21) Application number: 93904358.4
(22) Date of filing: 26.02.1993
(51) Int. Cl.: B62M 9/12

(54) **REAR DERAILLEUR FOR BICYCLE**

(30) Priority: 28.02.1992 JP 9891/92 U
(71) Applicant: MAEDA INDUSTRIES, LTD., Osaka-fu 587 (JP)
(72) Inventor: IWASAKI, Yoshihisa Maeda Industries, Ltd., Minamikawachi-gun Osaka-fu 587 (JP)
(74) Representative: Cross, Rupert Edward Blount
(86) International application number: JP9300242
(87) International publication number: WO9316910

(57) **Abstract**

A rear derailleur for a bicycle that is small, light, low in production cost and free from damage when the bicycle falls on the ground. This rear derailleur comprises a base member (12) supported on a bicycle frame (4) in front of a multi-staged sprocket (3) supported in turn around a hub shaft (2), an oscillating member (6) connected to this base member at the proximal portion thereof in such a manner as to oscillate in a widthwise direction of a wheel and extending rearwardly, and a chain guide (9) which rotatably supports a guide pulley (7) and a tension pulley (8) and is supported at the rear end portion of the oscillating member (6) in such a manner as to rotate about a shaft substantially in parallel with the hub shaft while being elastically biassed in a direction in which a tension is applied to the chain, wherein the guide pulley is oscillated in the widthwise direction of a wheel by drawing a speed-change operation cable connected to the above oscillating member, whereby the chain is switched to a desirable sprocket for engagement therewith.

## Description

### [Field of the Invention]

The present invention relates to a bicycle rear derailleur. More specifically, the present invention relates to a bicycle rear derailleur which is small and light, and is constituted to keep manufacturing cost at a low level.

### [Background Art]

A conventional bicycle rear derailleur, for instance, disclosed in Japanese Patent Laid-open Sho 64-12989, has a chain guide which rotatably supports a guide pulley and a tension pulley. This chain guide is pivotally supported, via a shift link mechanism such as a parallelogram pantograph mechanism, by a base member fixed to a bicycle frame, while being urged in a direction to tension a chain.

The chain first engages the tension pulley and then the guide pulley of the chain guide. After leaving the guide pulley, the chain is directed to one of the sprockets of a multipule sprocket. The chain guide is pivotally supported, with its pivot center selected at an upper portion thereof, by a movable member of the pantograph mechanism, and is elastically urged so that its lower portion tends to move rearward to tension the chain.

With the arrangement hereinabove, a speed change control lever provided, for example, on a handlebar, is operated to cause a speed change control cable to deform the pantograph link mechanism, moving the movable member of the pantograph link mechanism in parallel to the hub shaft. This causes the chain guide supported by the movable member to move in parallel to the hub shaft, shifting the chain onto a desired sprocket of the multiple sprocket.

The pantograph link mechanism comprises a base member supported by a rear end plate provided at an end portion of the hub shaft, an inner and an outer link members each pivotally connected at its base end to the base member and extended forwardly of the bicycle, and a movable member pivotally connected to respective free ends of these link members. The movable member pivotally supports the chain guide.

In a conventional rear derailleur which uses the pantograph link mechanism, it is possible to move the chain guide axially of the hub shaft while maintaining the chain guide in parallel to the plane of rotation of each sprocket, so that it is applicable to a multiple sprocket having a large number of sprockets.

However, in the conventional rear derailleur, a large number of parts are required for constituting the pantograph link mechanism, making the system very complicated as well as very large and heavy.

Also, it is very difficult to decrease manufacturing cost, so that the application is limited to sports-type bicycles and other relatively high-graded bicycles.

On the other hand, child bicycles and mini-cycles are small bicycles, and their price must be maintained at a low level. Thus, it is extremely diffucult to adopt the conventional type of rear derailleur which uses a pantograph link mechanism.

However, in those bicycles such as child bicycles, the number of speed shifts may be small and therefore, it is not necessary to use a pantograph link mechanism to move the chain guide truly in parallel to the plane of rotation for each sprocket.

Further, in a conventional bicycle rear derailleur, the base member is attached to a rear end plate located at an end of the hab shaft. As a result, the entire rear derailler projects significantly from the bicycle to form an outermost extremety of the bicycle width, making the rear derailleur susceptible to damage in case of bicycle rollover. In addition, the rear derailleur can be easily caught by bush and other obstacles during an off-road cycling, resulting in interfered speed change capability.

### [Disclosure of the Invention]

It is therefore an object of the present invention to provide a bicycle rear derailleur which is small and light, and can be manufactured at a low cost.

Another object of the present invention is to provide a bicycle rear derailleur which does not significantly project outward axially of the hub shaft, so that the rear derailleur is less susceptible to damage in case of bicycle rollover.

The present invention provides a bicycle rear derailleur comprising: a base member supported by a bicycle frame ahead of a multiple sprocket supported around a hub shaft, a reawardly extending pivotal member pivoted at a base end thereof to the base member for movement laterally of the bicycle, and a chain guide pivotally supported on a shaft substantially parallel to the hub shaft at a rear end portion of the pivotal member, the chain guide rotatably supporting a guide pulley and a tension pulley while being elastically urged in a direction to tension a chain;
whereby the guide pulley is pivotally moved laterally of the bicycle for shifting the chain to a desired sprocket by pulling a control cable connected to the pivotal member.

Other objects, characteristics and advantages of the present invention will become clear in the description of preferred embodiments to be explained, hereinafter, referring to the attached drawings.

### [Brief Description of the Drawings]

Fig. 1 is a perspective view showing a rear derailleur according to the present invention.

Fig. 2 is a plan view showing the rear derailleur according to Fig. 1.

Fig. 3 is a drawing to explain the function of a rear derailleur according to the present invention.

Fig. 4 is a drawing to explain the function of a rear derailleur according to a second embodiment of the present invention.

Fig. 5 is a view showing the rear derailleur according to the second embodiment of the present invention, and correponds to a view when the rear derailleur of Fig. 1 is viewed from the direction shown by Arrow A.

### [Best Mode for Carrying Out the Invention]

Embodiments of the present invention will now be described specifically, referring to the attached Figures.

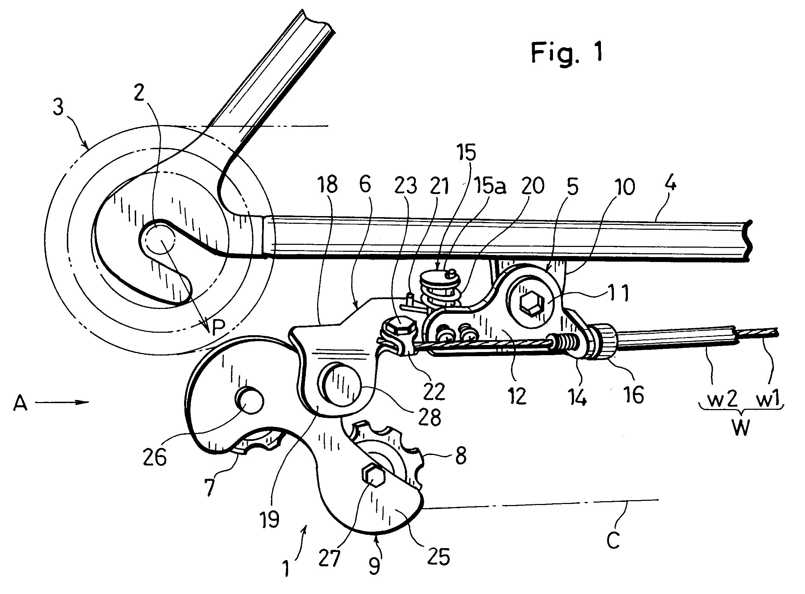

As shown in Fig. 1, a rear derailleur 1 according to the present invention comprises a base member 5 supported by a chain stay 4 ahead of a multiple sprocket 3 supported around a hub shaft 2, a rearwardly extending pivotal member 6 pivoted at a base end thereof to the base member 5, and a chain guide 9 which is pivotally supported at a rear end portion of the pivotal member 6 around an axis significantly in parallel to the hub shaft 2, while being urged in a direction to tension a chain C, and rotatably supporting a guide pulley 7 and a tension pulley 8.

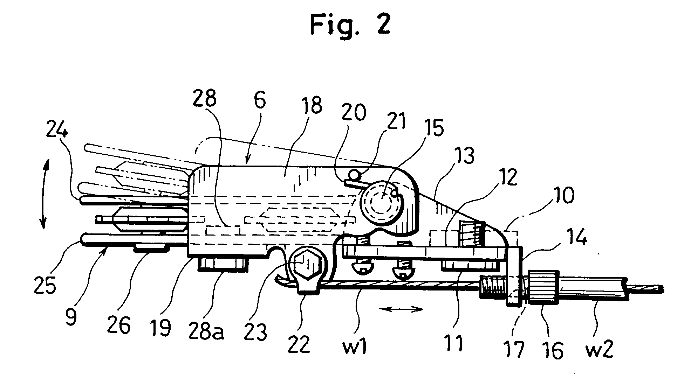

The base member 5 is formed by bending a metal plate as shown in Figs. 1 and 2, and has a vertical wall 12 at which it is fixed by a screw 11 to a bracket 10 welded at a lower intermediate portion of the chain stay 4, a lateral wall 13 bent to extended inward laterally of the bicycle from a lower edge of the vertical wall 12, and a sheath catch 14 extended outward laterally of the bicycle from a front edge of the vertical wall 12.

The lateral wall 13 is formed with a pivot shaft 15 which projects upward for pivotally supporting the pivotal member 6. The sheath catch 14 is formed with a threaded longitudinal bore 17 for accepting an sheath stopper bolt 16, to which an end of an outer sheath w2 is screwed in. The outer sheath w2 and an inner wire w1 constitute a speed change control cable W.

The pivotal member 6, which is arranged in a manner that it overlaps with a top surface of the lateral wall 13, has an arm portion 18 pivoted to the pivot shaft 15, and a chain guide mounting portion 19 formed by bending downwardly an outer rear portion of this arm portion 18. The pivot shaft 15 is inserted with a return spring 20, the top end of which is fixed to a head 15a of the pivot shaft 15, whereas the bottom end is fastened to a pin 21 provided on a top surface of the arm portion 18 of the pivotal member 6. The pivotal member 6 is constantly given an elastic urge acting inward laterally of the bicycle by the return spring 20.

The arm portion 18 has, on its intermediate outside portion, a catch member 22 attached by a screw 23 for fixing the inner wire w1 extending out of an end of the sheath stopper bolt 16. The inner wire w1 is fixed to the pivotal member 6 by having an end of inner wire w1 pinched between the catch member 22 and the arm portion 18.

The chain guide 9 has, as shown in Figs. 1 and 2, an inner and an outer guide plates 24 and 25. Support shafts 26 and 27 are provided between these guide plates 24, 25 for rotatably supporting the guide pulley 7 and tension pulley 8 respectively. The outer guide plate 25 is pivoted at an intermediate portion thereof by a lateral shaft 28 provided on the chain guide mounting portion 19 of the pivotal member 6.

The chain guide 9 is pivoted at a position inward axially of the hub shaft from the chain guide mounting portion 19.

The chain guide 9 is elastically urged in a direction to tension a chain C by an unillustrated spring provided at a head 28a of the lateral shaft 28, so that the chain C which engages the tension pulley 8, guide pulley 9 and then one of the sprocket of the multiple sprocket 3 will not become loose.

With the rear derailleur 1 arranged as described hereinabove, when the inner wire w1 is pulled by an unillustrated speed change control lever assembly, the pivotal member 6 is pivoted outward laterally of the bicycle to move the guide pulley 7 also outward laterally of the bicycle. By this, a portion of the chain C immediately before engaging the sprocket is pressed outward axially of the hub shaft; the chain's running path is altered to cause the chain C to shift to an immediately outward adjacent sprocket.

On the other hand, when the inner wire w1 is released, the return spring 20 causes the pivotal member 6 to pivot inward laterally of the bicycle. This causes the guide pulley 7 or the outer guide plate 25 to press the chain inward laterally of the bicycle, shifting the chain C to an immediately inward adjacent sprocket.

In the rear derailleur 1 arranged as hereinabove, the chain guide is moved not by a pantograph link mechanism as in a conventional rear derailleur; instead, an arrangement is made wherein the pivotal member 6 is pivoted ahead of the multiple sprocket 3, and by pivotally moving it on the pivot shaft 15 positioned at a front end portion thereof, the chain guide provided at a rear end portion of the pivotal member 6 is moved axially of the hub shaft.

Hence, the rear derailleur 1 according to the present embodiment does not need the four link members which conventionally constitute the pantograph link mechanism, resulting in a very simplified structure.

In addition, it is possible to significantly reduce the number of parts, enabling miniturization and weight reduction of the rear derailleur 1.

Further, it is also possible to drasticaly reduce the manufacturing cost of the rear derailleur.

As a result, it is now possible to equip the rear derailleur on such bicycles as child bicycles and mini-cycles.

In the rear derailleur 1 according to the present embodiment, the base member 5 is supported on the chain stay 4 of the bicycle frame and ahead of the multiple sprocket 3 supported around the hub shaft. The pivotal member 6, pivoted at its base end to the base member 5, extends rearward, supporting at its rear end the chain guide 9 for shifting the chain C.

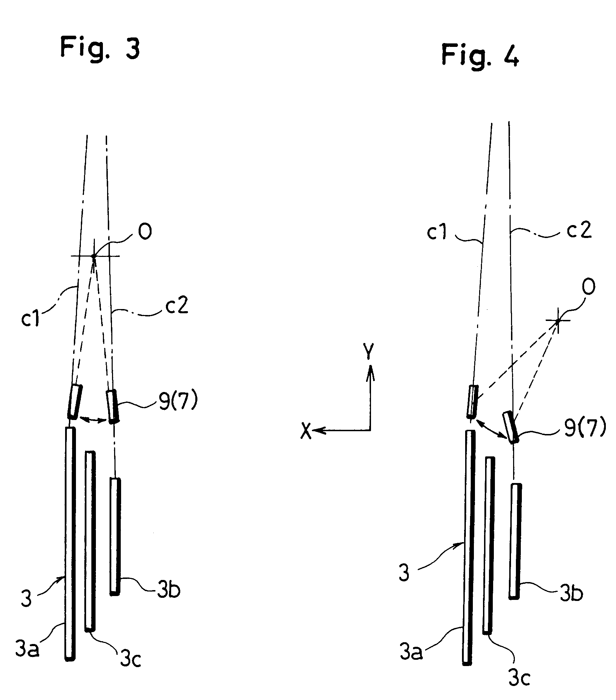

In other words, in this embodiment, the pivot axis 0 of the pivotal member 6 is provided, as shown in Fig. 3, ahead of the multiple sprocket 3, and therefore, the chain guide 9 is moved along an arcuate path around the pivot axis 0. As a result, diferring from a conventional rear derailleur which uses a pantograph link mechanism, it is not possible to cause the chain guide 9 to move in parallel to the plane of rotation of each sprocket 3a, 3b, 3c.

However, since the number of speed shifts for child bicycles and mini-cycles may be smaller than 5, the non-use of a pantograph link mechanism and resulting lack of accurate parallelism of the chain guide's movement to the plane of rotation of each sprocket does not cause problems.

In addition, since the pivot axis 0 is positioned ahead of the multiple sprocket 3, it is possible, as shown in Fig. 3, to move the chain guide 9 axially of the hub shaft generally in line with inclined paths of the chain C, one represented by a chain line c1 provided when the chain runs on the diametrically largest sprocket 3a, and another, the chain line c2 provided when the chain runs on the diametrically smallest sprocket.

In other words, if the number of speed shifts, or the number of sprockets, is small, there is no significant change in the angle formed between the chain guide 9 and each sprocket.

Therefore, it is not likely to occur that the non-parallel movement of the chain guide 9 to the plane of rotation of each sprocket would cause the chain to disengage from a sprocket.

Furthermore, in this embodiment, the entire rear derailleur is located below an intermediate portion of the chain stay, and at the same time the pivot shaft 15 of the pivotal member 6 is located at a position inward axially of the hub shaft from the vertical wall 12 which is the connecting portion of the base member 5 to the bicycle frame Still further, the chain guide 9 is pivoted at a position inward axially of the hub shaft from the chain guide mounting portion 19.

In other words, in this embodiment, the rear derailleur 1 including the pivotal member 6 and the chain guide 9 does not project from the end of hub shaft 2 in its entirety.

As a result, it is less likely that the rear derailleur is damaged in case of bicycle rollover. Likewise, the rear derailleur is less likely to be caught by bush and the like, resulting in less chance for interfered speed shift capability. Hence, the present embodiment is very suitable as a rear derailleur for child bicycles.

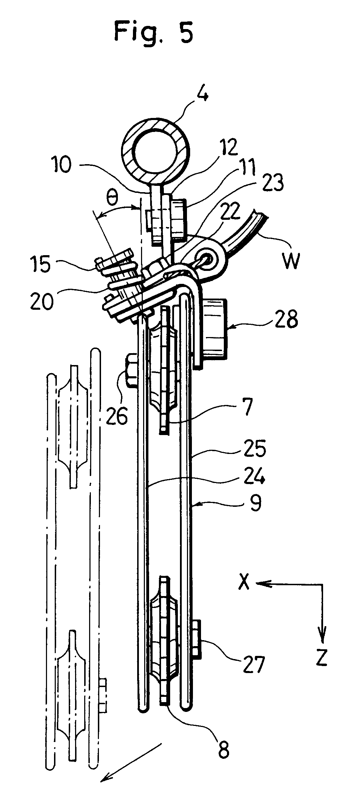

Figs. 4 and 5 show a sencond embodiment of the present invention.

In this embodiment, the pivot axis 0 of the pivotal member 6 is located laterally outside the chain line c2 provided when the chain engages the diametrically smallest sprocket 3b, and at the same time the pivot axis 0 is slanted relative to the vertical by a predetermined angle ϑ.

With this arrangement, it becomes possible to cause the chain guide 9 or the guide pulley 7 to move inward axially of the hub shaft (the direction indicated by Arrow X, Figs. 4 and 5) and at the same time both forwardly (Arrow Y, Fig. 4) and downwardly (Arrow Z, Fig. 5) of the bicycle, or in other words, in a downwardly forward direction as viewed from the side of the bicycle (Arrow P, Fig. 1).

As a result, it is now possible to cause the guide pulley 7 to move along a generatrix of a fructom difined by connecting the outer cirmcumference of each sprocket of the multiple sprocket 3.

Moreover, since the guide pulley 7 can now be moved generally along a forwardly downward generatrix of the fructom, the engaging angle of the chain C with each sprocket is now maintained generally constant.

As a result, the pivotal movement of the pivotal member 6 becomes smaller, resulting in remarkably improved speed change efficiency and operatability.

Still further, the distance between the chain guide and each sprocket does not change substantially now, eliminating the problem that the chain C disengages from a sprocket.

The scope of the present invention is not limited to the above-described embodiments.

For example, the base member 5 and the pivotal member 6 are formed respectively by bending metal plates; however, they may be formed by casting or other methods.

Likewise, the chain guide 9 according to the present embodiment uses what is known as the triangle balance type; however, the pendlum type and other types of chain guides may also be used.

Further, the embodiments use a sheathed cable comprising an inner wire w1 and an outher sheath w2 as the speed change control cable W; however, a bear cable comprising only an inner wire may be used.

Still further, an end of the outer sheath w2 is fixed to the sheath catch 14 provided on the base member 5 in the present embodiment; however, it is also possible to form a separate member for fixing the outer sheath on the chain stay 4.

Still further, in the embodiment, the base member 5 is supported by a bicycle frame via the bracket 10 projecting downwardly from an intermediate portion of the chain stay 4; however, the method for supporting the base member to the bicycle frame is not limited to what is adoped in the embodiment. For example, it is also possible to provide a bracket extending from the rear end plate provided at the end of the hub shaft, and to support the base member at a front end portion of this bracket.

Furthermore, if the outer diameter of each sprocket of the multiple sprocket 3 is selected so that connecting their outer circumferences will form a line parallel to the arcuate path of the guide pulley 7, it becomes possible to make constant the distance between the guide pulley and each sprocket, thereby further improveing the speed change operatability.

In the second embodiment, the pivot axis 0 of the pivotal member is slanted relative to the vertical and is located laterally outside a running path of the chain engaged with the multiple sprocket; however, the speed change capability can also be improved by only slanting the pivot axis relative to the vertical so that the guide pulley moves inward axially and downwardly of the hub shaft when the pivotal member is pivoted. Likewise, pivot axis 0 may only be located laterally outside a chain running path so that the guide pulley moves inward axially of the hub shaft and forwardly of the bicycle when the pivotal member is pivoted.

## Claims

1. A bicycle rear derailleur comprising: a base member supported by a bicycle frame ahead of a multiple sprocket supported around a hub shaft, a reawardly extending pivotal member pivoted at a base end thereof to the base member for movement laterally of the bicycle, and a chain guide rotatably supported on a shaft substantially parallel to the hub shaft at a rear end portion of the pivotal member, the chain guide rotatably supporting a guide pulley and a tension pulley while being elastically urged in a direction to tension a chain;
whereby the guide pulley is pivotally moved laterally of the bicycle for shifting the chain to a desired sprocket by pulling a speed control cable connected to the pivotal member.

2. The bicycle rear derailleur according to Claim 1, wherein the pivotal axis of the pivotal member is slanted relative to the vertical,
whereby the guide pulley moves inward axially of the hub shaft and downwardly when the pivotal member is pivoted.

3. The bicycle rear derailleur according to Claim 1, wherein the pivotal axis of the pivotal member is located laterally outside a chain running path provided when the chain engages a diametrically smallest sprocket of the multiple sprocket,
whereby the guide pulley moves inward axially of the hub shaft and forewardly of the bicycle when the pivotal member is pivoted.

4. The bicycle rear derailleur according to Claim 1, wherein the pivotal axis of the pivotal member is slanted relative to the vertical at a position laterally outside a chain running path provided when the chain engages a diametrically smallest sprocket of the multiple sprocket,
whereby the guide pulley moves inward axially of the hub shaft and downward forwardly of the bicycle when the pivotal member is pivoted.

5. The bicycle rear derailleur according to Claim 1, wherein the pivotal axis of the pivotal member is located between a chain running path provided when the chain engages a diametrically largest sprocket of the multiple sprocket and another chain running path provided when the chain engages a diametrically smallest sprocket.

6. The bicycle rear derailleur according to Claim 1,
wherein both of the base member and the pivotal member is formed by bending a metal plate;
the base member including a vertical wall supported by a bicycle frame, and a lateral wall bent to extend inward laterally of the bicycle from a lower edge of the vertical wall, the lateral wall being provided with a pivot shaft for pivotally supporting the pivotal member;
the movable member including a pivotal arm portion arranged generally in parallel to the lateral wall to pivot around the pivot shaft for movement laterally of the bicycle, and a chain guide mounting portion bent to extend downwardly from an outer rear portion of the pivotal arm portion, the chain guide monting portion being provided with a shaft for pivotally supporting the chain guide.

7. The bicycle rear derailleur according to Claim 6, wherein the control cable comprises an inner wire and an outer sheath,
the vertical wall having a forward edge provided with a sheath catch which is bent to extend outward laterally of the bicycle for fixing the outer sheath of the control cable.

8. The bicycle rear derailleur according to Claim 1,
wherein the pivotal axis of the pivotal member is located inward axially of the hub shaft from a position at which the base member is connected to the bicycle frame.

9. The bicycle rear derailleur according to Claim 1,
wherein the outer diameter of each sprocket of the multiple sprocket is selected so that the distance from the outermost edge of said each sprocket to the arcuate pivotal path of the outermost edge of the guide pulley is generally constant.

10. The bicycle rear derailleur according to Claim 6,
wherein the chain guide is pivotally supported at a position inward axially of the hub shaft from the chain guide mounting portion.
